(19) **Europäisches Patentamt / European Patent Office / Office européen des brevets**

(11) **EP 4 418 179 A1**

(12) **EUROPEAN PATENT APPLICATION**
published in accordance with Art. 153(4) EPC

(43) Date of publication:
**21.08.2024 Bulletin 2024/34**

(21) Application number: **23817936.0**

(22) Date of filing: **10.11.2023**

(51) International Patent Classification (IPC):
***G06Q 10/0639*** (2023.01)

(52) Cooperative Patent Classification (CPC):
**Y04S 10/50**

(86) International application number:
**PCT/CN2023/131080**

(87) International publication number:
**WO 2024/146267 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 CN 202310015387**

(71) Applicants:
• **China Three Gorges Renewables (Group) Co., Ltd.**
  **Beijing 101199 (CN)**
• **Three Gorges High Tech Information Technology Co., Ltd**
  **Wuhan, Hubei 430014 (CN)**

(72) Inventors:
• **LAN, Jinjiang**
  **Tongzhou District**
  **Beijing 101199 (CN)**
• **GU, Wei**
  **Tongzhou District**
  **Beijing 101199 (CN)**
• **ZHANG, Jinwei**
  **Tongzhou District**
  **Beijing 101199 (CN)**

• **XIANG, Jiaqi**
  **Tongzhou District**
  **Beijing 101199 (CN)**
• **DU, Leiyu**
  **Tongzhou District**
  **Beijing 101199 (CN)**
• **SU, Zhengxiong**
  **Tongzhou District**
  **Beijing 101199 (CN)**
• **XU, Yunsheng**
  **Tongzhou District**
  **Beijing 101199 (CN)**
• **XIAO, Yu**
  **Tongzhou District**
  **Beijing 101199 (CN)**
• **LIU, Guoqing**
  **Tongzhou District**
  **Beijing 101199 (CN)**
• **XIANG, Xingchen**
  **Tongzhou District**
  **Beijing 101199 (CN)**
• **ZHAO, Siyu**
  **Tongzhou District**
  **Beijing 101199 (CN)**

(74) Representative: **Elzaburu S.L.P.**
  **Edificio Torre de Cristal**
  **Paseo de la Castellana 259 C, planta 28**
  **28046 Madrid (ES)**

(54) **MICROSERVICES-ARCHITECTURE-BASED FULL-LIFECYCLE MANAGEMENT SYSTEM FOR NEW-ENERGY POWER GENERATION DEVICES**

(57) The present invention provides a full life cycle management system for a new energy power generation equipment based on a micro-service architecture, including: an inputting module, configured to receive exclusive-equipment-parameter-information of each new energy power generation equipment in a new energy power station input by a user based on a terminal device; an architecture module, configured to generate a hierarchical tree of a logical equipment corresponding to the new energy power station at the micro-service architecture side based on the exclusive-equipment-parameter-information; an updating module, configured to update equipment-update-information of the new energy power generation equipment to the hierarchical tree of the logical equipment in real time, and obtain a update record of the hierarchical tree and information update record of each new energy power generation equipment; and a management module, configured to generate a full-life-cy-

**(Cont. next page)**

cle-management-record of the new energy power generation equipment based on the update record of the hierarchical tree and the information update record of each new energy power generation equipment. Thus, automatic life cycle management and tracking a business process of the new energy power generation equipment is realized, the lag of managers is avoided, the costs is reduced and the overall productivity of enterprises is improved.

FIG. 1

## Description

The present application claims priority to Chinese Patent Application No. 202310015387.7, titled "FULL LIFE CYCLE MANAGEMENT SYSTEM FOR NEW ENERGY POWER GENERATION EQUIPMENT BASED ON MICRO-SERVICE ARCHITECTURE", filed to China National Intellectual Property Administration on January 3, 2023, which is hereby incorporated by reference in its entirety.

## TECHNICAL FIELD

The present invention relates to the technical field of equipment management and, in particular, to a full life cycle management system for a new energy power generation equipment based on a micro-service architecture.

## BACKGROUND

Since the concept of micro-service architecture was formally put forward in 2014, micro-service technology is developing rapidly and becoming the most popular software architecture in the industry gradually with its advantages of independent deployment, extensibility, rapid iteration, fault tolerance and easy development. Compared with most monolithic management software in power generation industry, it has made great progress in both technical innovation and design concept. Under the background of resource shortage, energy saving and emission reduction, the requirements for cost management in power enterprises are getting higher. Besides, as affected by the international situation caused by the epidemic, it is an inevitable trend to update the technical architecture, introduce micro-service framework and build a more efficient management system under the background. Equipment management is a main work line in power generation activities. Compared with other types of power generation equipment, new energy power generation equipment has the characteristics of more equipment parts, complicated models and manufacturers, and involving more technical parameters.

However, at present, equipment management generally focuses on traditional paper files or electronic versions of Excel and Word to keep a record, which has some problems such as slow operation speed, disorganization and complexity, and files may be lost or damaged. In case of something happens to the power generation equipment at site, it is inconvenient to search for related information, which makes the management staff lag behind the problem to a great extent. Meanwhile, the process of procurement, commissioning, operation, maintenance, technical transformation, scrapping and other processes of an equipment in a full life cycle can not be automatized, which leads to lag of management, invisibly increasing costs and reducing the overall productivity of an enterprise.

Thus, the present invention proposes a full life cycle management system for a new energy power generation equipment based on a micro-service architecture.

## SUMMARY

The present invention provides a full life cycle management system for a new energy power generation equipment based on a micro-service architecture, which is configured to generate a hierarchical tree of a logical equipment corresponding to a new energy power station at a micro-service architecture side based on exclusive-equipment-parameter-information of the new energy power generation equipment, update equipment-update-information of the new energy power generation equipment to the hierarchical tree of the logical equipment in real time, a full-life-cycle-management-record of the new energy power generation equipment and realize automatic life cycle management and tracking a business process of the new energy power generation equipment. It can check equipment usage status of each station in real time, master quantity of equipment in each station and quality of equipment ledger control with no need to spend extra time to adapt to control habits of station equipment at the system terminal, thus solving the problems of slow, scattered and complicated operation, avoiding loss and damage of files, avoiding the lag of management staff, reducing the costs and improving the overall productivity of enterprises.

The present invention provides a full life cycle management system for a new energy power generation equipment based on a micro-service architecture, including:

an inputting module, configured to receive exclusive-equipment-parameter-information of each new energy power generation equipment in a new energy power station input by a user based on a terminal device;

an architecture module, configured to generate a hierarchical tree of a logical equipment corresponding to the new energy power station at the micro-service architecture side based on the exclusive-equipment-parameter-information;

an updating module, configured to update equipment-update-information of the new energy power generation equipment to the hierarchical tree of the logical equipment in real time, and obtain a update record of the hierarchical tree and an information update record of each new energy power generation equipment; and

a management module, configured to generate a full-life-cycle-management-record of the new energy power generation equipment based on the update record of the hierarchical tree and the information update record of each new energy power generation equipment.

Optionally, the inputting module includes:

an information receiving unit, configured to receive information of the new energy power generation equipment in the new energy power station input by the user based on the terminal device; and
an information reorganizing unit, configured to reorganize the information of the new energy power generation equipment based on a standardized template to obtain the exclusive-equipment-parameter-information of each new energy power generation equipment.

Optionally, the architecture module includes:

a device generation unit, configured to generate the logical equipment of each new energy power generation equipment at the micro-service architecture side based on the exclusive-equipment-parameter-information of the new energy power generation equipment; and
a hierarchy building unit, configured to build the hierarchical tree of the logical equipment based on a parent-child relationship between the logical equipment.

Optionally, the equipment generation unit includes:

an information determining subunit, configured to determine attribute information, an equipment name and an equipment position of the new energy power generation equipment based on the exclusive-equipment-parameter-information;
an identification generating subunit, configured to determine a corresponding material code based on the attribute information, determine a serial number of each new energy power generation equipment, and generate an unique identification code of the corresponding new energy power generation equipment based on the corresponding material code and serial number;
an information binding subunit, configured to bind the equipment name and the unique identification code of the corresponding new energy power generation equipment to obtain initial architecture information of the logical equipment; and
a logic generating subunit, configured to generate a logic device corresponding to the new energy power generation equipment at the micro-service architecture side based on the initial architecture information.

Optionally, the updating module includes:

a link building module, configured to build a unique communication link between each new energy power generation equipment and the corresponding logic device; and

an information updating module, configured to update the equipment-update-information of the new energy power generation equipment to the hierarchical tree of the logical equipment in real time based on the unique communication link between the new energy power generation equipment and the corresponding logical equipment, and obtain the update record of the hierarchical tree and the information update record of each new energy power generation equipment.

Optionally, the management module includes:

a cycle evaluation unit, configured to periodically evaluate the corresponding new energy power generation equipment based on the update record of the hierarchical tree and the information update record of the new energy power generation equipment to obtain a cycle evaluation result;
a record generation unit, configured to generating a full life information record corresponding to the new energy power generation equipment in real time based on initial architecture information of a logical equipment corresponding to the new energy power generation equipment and the information update record of the corresponding new energy power generation equipment; and
a result binding unit, configured to bind and fuse the cycle evaluation result and the full life information record of the new energy power generation equipment to obtain the full-life-cycle-management-record of the new energy power generation equipment.

Optionally, the cycle evaluation unit includes:

a joint evaluation subunit, configured to carry out periodic joint evaluation on the new energy power generation equipment based on the update record of the hierarchical tree to obtain a periodic joint evaluation result;
an independent evaluation subunit, configured to perform periodic independent evaluation on the new energy power generation equipment based on the information update record of the new energy power generation equipment to obtain a periodic independent evaluation result; and
a result summarizing subunit, configured to summarize the periodic macro evaluation result and the periodic independent evaluation result to obtain the periodic evaluation result.

Optionally, the joint evaluation subunit includes:

an update determining terminal, configured to determine an equipment being updated and an equipment-update-information set in a current evaluation period based on the update record of the hierarchical tree, determine update-relevance-information in each first equipment-update-information in the equipment-update-information set, and determine a range of affected interval level of each piece of update-relevance-information;

an information screening terminal, configured to determine interval levels between each equipment being updated and the new energy power generation equipment being evaluated based on a parent-child relationship in the hierarchical tree of the logical equipment, and taking the update-relevance-information corresponding to the range of affected interval level containing the interval level as final update-relevance-information; and

a joint evaluation terminal, configured to obtain the periodic joint evaluation result based on all the final update-relevance-information in the equipment-update-information set.

Optionally, the joint evaluation terminal includes:

a loss calculation sub-terminal, configured to determine an impact factor of the final update-relevance-information, calculate a final impact factor of the final update-relevance-information based on the impact factor and the interval level, and calculate a first loss ratio of the new energy power generation equipment being evaluated in the current evaluation period based on the final impact factors of all the final update-relevance-information in the first equipment-update-information set;

an evaluation calculation sub-terminal, configured to calculate a joint evaluation value of the new energy power generation equipment being evaluated in the current evaluation period based on a joint evaluation value of the new energy power generation equipment being evaluated in a previous evaluation period and the first loss ratio in the current evaluation period, and sort joint evaluation values of the new energy power generation equipment in all evaluation periods to obtain the periodic joint evaluation result.

Optionally, the independent evaluation subunit includes:

a factor determining terminal, configured to determine second equipment-update-information of the new energy power generation equipment in the current evaluation period based on the information update record, determine equipment-influence-information in the second equipment-update-information, and determine a loss factor of the equipment-influence-information;

a loss calculation terminal, configured to calculate a second loss ratio of the new energy power generation equipment in the current evaluation period based on the loss factors of all the equipment-influence-information in the second equipment-update-information; and

an independent evaluation terminal, configured to calculate an independent evaluation value of the new energy power generation equipment in the current evaluation period based on an independent evaluation value of the new energy power generation equipment in a previous evaluation period and the second loss ratio in the current evaluation period, and sort independent evaluation values of the new energy power generation equipment in all evaluation periods to obtain the periodic independent evaluation result.

Other features and advantages of the present invention will be set forth in the description which follows, and will be obvious in part from the description, or may be learned by practice of the invention. The objects and other advantages of the present invention can be realized and obtained by the structure particularly pointed out in the written specification and claims, as well as the accompanying drawings.

In the following, the technical scheme of the present invention will be further described in detail through the accompanying drawings and embodiments.

**BRIEF DESCRIPTION OF DRAWINGS**

The accompanying drawings are provided to provide a further understanding of the present invention and constitute a part of the specification. Together with the embodiments of the present invention, they serve to explain the invention and do not constitute a limitation of the invention. In the attached drawings:

FIG. 1 is a schematic diagram of a full life cycle management system for a new energy power generation equipment based on a micro-service architecture in an embodiment of the present invention.

FIG. 2 is a schematic diagram of an inputting module in an embodiment of the present invention.

FIG. 3 is a schematic diagram of an architecture module in an embodiment of the present invention.

FIG. 4 is a schematic diagram of an equipment generation unit in an embodiment of the present invention.

FIG. 5 is a schematic diagram of an updating module in an embodiment of the present invention.

FIG. 6 is a schematic diagram of a management module in an embodiment of the present invention.

FIG. 7 is a schematic diagram of a cycle evaluation unit in an embodiment of the present invention.

FIG. 8 is a schematic diagram of a joint evaluation subunit in an embodiment of the present invention.

FIG. 9 is a schematic diagram of a joint evaluation terminal in an embodiment of the present invention.

FIG. 10 is a schematic diagram of an independent evaluation subunit in an embodiment of the present invention.

FIG. 11 is a schematic diagram of an overall system constructed by distributed deployment mode of micro-service architecture in an embodiment of the present invention.

FIG. 12 is a schematic diagram of construction process of an equipment ledger in an embodiment of the present invention.

FIG. 13 is a schematic diagram of a production business process in an embodiment of the present invention.

FIG. 14 is a schematic diagram showing effect of full life cycle management for equipment in an embodiment of the present invention.

FIG. 15 is a schematic diagram of equipment parameter information in an embodiment of the present invention.

## DESCRIPTION OF EMBODIMENTS

Preferred embodiments of the present invention will be described below with reference to the accompanying drawings, and it should be understood that the preferred embodiments described herein are only used to illustrate and explain the present invention, and are not used to limit the present invention.

Embodiment 1:

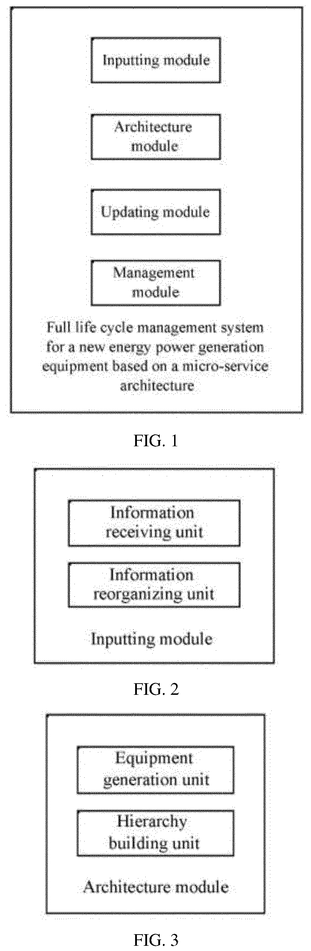

The present invention provides a full life cycle management system for a new energy power generation equipment based on a micro-service architecture, referring to FIG 1, FIG. 11 and FIG. 13, including:

an inputting module, configured to receive exclusive-equipment-parameter-information of each new energy power generation equipment in a new energy power station input by a user based on a terminal device;

an architecture module, configured to generate a hierarchical tree of a logical equipment corresponding to the new energy power station at the micro-service architecture side based on the exclusive-equipment-parameter-information;

an updating module, configured to update equipment-update-information of the new energy power generation equipment to the hierarchical tree of the logical equipment in real time, and obtain a update record of the hierarchical tree and an information update record of each new energy power generation equipment; and

a management module, configured to generate a full-life-cycle-management-record of the new energy power generation equipment based on the update record of the hierarchical tree and the information update record of each new energy power generation equipment.

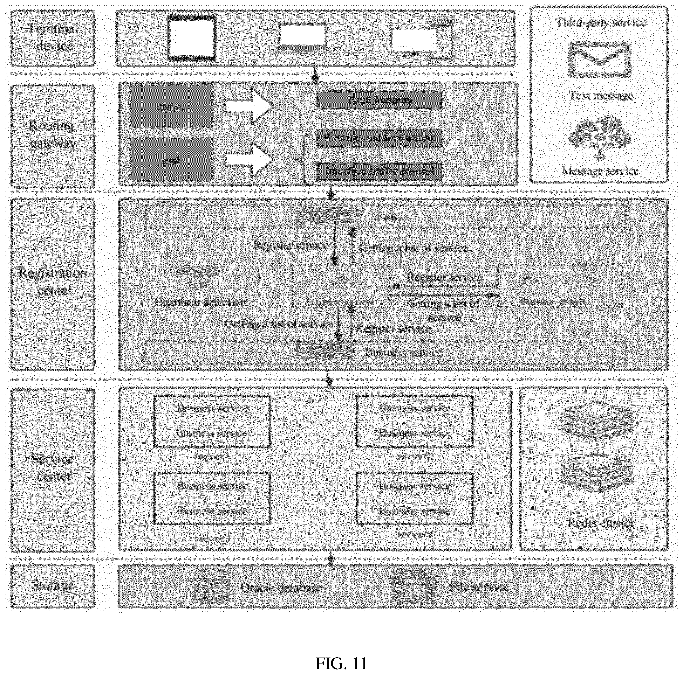

In this embodiment, the micro-service architecture side is the overall system constructed by distributed deployment mode of micro-service architecture with reference to FIG. 11, where:

terminal device: the user can access system through a browser of the terminal device.

third-party service: including a short message service and a message service; where the short message service is used to send system short messages; and the message service is used for message communication with other business systems.

routing gateway: including a nginx service and a zuul service; where the nginx service is used for jumping on system static page and accessing WEB management platform; and the zuul service is used for routing and forwarding of all front-end requests.

registration center: including service registration and discovery; zuul service, business service (sqo) and eureka-client service will all be registered in the central service (eureka-server), and other services can also be found through the registration center; the eureka-server service is responsible for service registration and discovery, single sign-on access interface and obtaining of default station interface; an eureka-client is a web management platform service, which is used to start and stop all business services.

service center: including a business services and a redis. According to different stations, the system is divided into various business services, and each business service runs independently without interference. The reids mainly stores user session, user token and user authentication information, and uses cluster mode to ensure its high availability.

storage: including an oracle database and a file service. The oracle database stores all the recorded data of the system. The file service store pictures and file data in the system.

In this embodiment, the main functions of the full life cycle management system for the new energy power generation equipment based on a micro-service architecture include equipment procurement, material code application, material code management, equipment ledger standard template, equipment technical parameter template, physical equipment, logical equipment, maintenance management, technical transformation management, patrol management, two-ticket management, periodic evaluation and so on.

In this embodiment, the terminal device is a terminal device used to receive user input information (for example, related information of the new energy power generation equipment) or access request (request to access the full life cycle management system for the new energy power generation equipment).

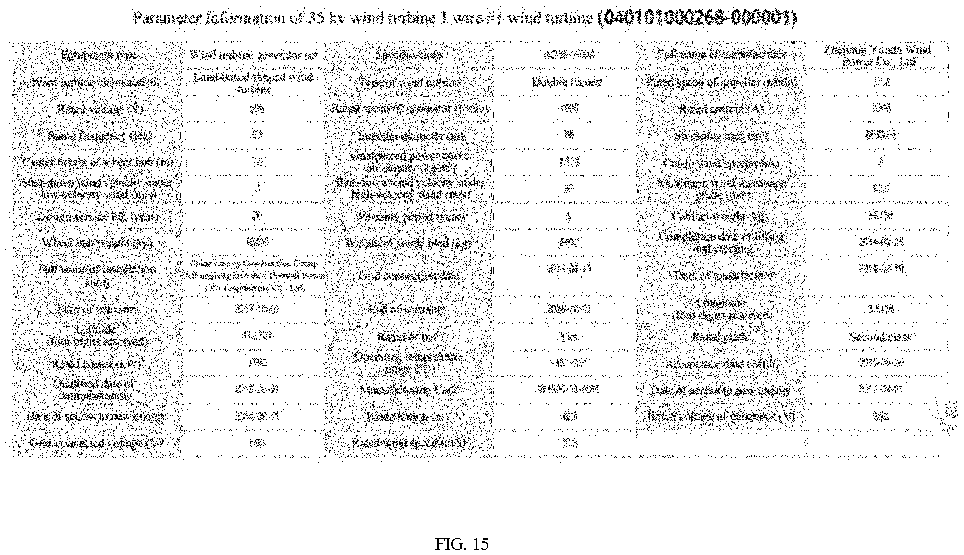

In this embodiment, the exclusive-equipment-parameter-information is information containing all the parameter information corresponding to the new energy power generation, which is obtained after reorganizing the information of the new energy power generation equipment input by the user. For details, please refer to FIG. 15.

In this embodiment, the hierarchical tree of the logical equipment is a hierarchical tree structure generated based on the new energy power generation equipment at the micro-service architecture side, which can reflect a parent-child relationship between the new energy power generation equipment in the new energy power station.

In this embodiment, the update record of the hierarchical tree is a record containing the hierarchical-tree-update-information of the logical equipment, which is obtained after updating the equipment-update-information of the new energy power generation equipment to the hierarchical tree of the logical equipment in real time. The equipment-update-information includes the update information generated in the production business processes such as equipment procurement, maintenance, commissioning, patrol inspection, overhaul, rotation and scrapping.

In this embodiment, the information update record is a historical record containing specific update information of the corresponding new energy power generation equipment obtained after updating the equipment-update-information of the new energy power generation equipment to the corresponding hierarchical tree of the logical equipment in real time.

In this embodiment, the full-life-cycle-management-record is a record used to record all detailed information such as parameter information, update information and management information in the full life cycle of the new energy power generation equipment.

The above technique has the beneficial effects that: by generating a hierarchical tree of a logical equipment corresponding to a new energy power station at a micro-service architecture side based on exclusive-equipment-parameter-information of the new energy power generation equipment, updating equipment-update-information of the new energy power generation equipment to the hierarchical tree of the logical equipment in real time, a full-life-cycle-management-record of the new energy power generation equipment and realizing automatic life cycle management and tracking a business process of the new energy power generation equipment, it can check equipment usage status of each station in real time, master quantity of equipment in each station and quality of equipment ledger control with no need to spend extra time to adapt to control habits of station equipment at the system terminal, thus solving the problems of slow, scattered and complicated operation, avoiding loss and damage of files, avoiding the lag of management staff, reducing the costs and improving the overall productivity of enterprises.

Embodiment 2:

On the basis of Embodiment 1, the inputting module, referring to FIG. 2, FIG. 12 and FIG. 15, includes:

an information receiving unit, configured to receive information of the new energy power generation equipment in the new energy power station input by the user based on the terminal device; and
an information reorganizing unit, configured to reorganize the information of the new energy power generation equipment based on a standardized template to obtain the exclusive-equipment-parameter-information of each new energy power generation equipment.

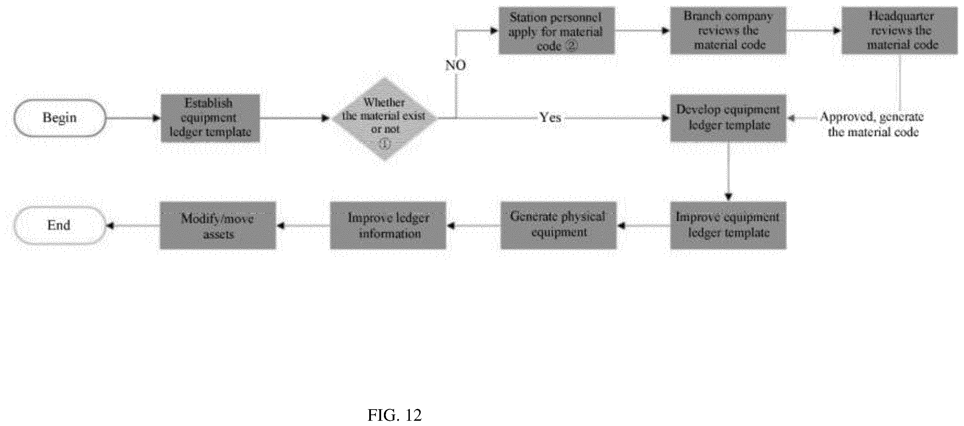

In this embodiment, referring to FIG. 12, in most cases, an equipment in a power station does not exist singly, and it is a common situation that there are many wind turbines or inverters of the same type in a power station. The physical equipment can be generated through an equipment ledger template. In the process of generating the physical equipment, the standard ledger template of the equipment prefabricated by the headquarters can be directly referenced, and the generation quantity can be input according to the actual situation of the station. For example, there are 58 wind turbines in a station, all of which belong to the same model. In the process of generating the physical equipment, the relevant ledger parameter information is filled in the equipment ledger template, "generate physical equipment" is clicked, and 58 is entered in the generation quantity according to the actual situation, so that all the wind turbine physical equipment in the station can be generated by one click, which greatly saves the equipment generation time of staff at the power station.

In this embodiment, the information of the new energy power generation equipment is the parameter information related to the new energy power generation equipment received based on the terminal device input by the user.

In this embodiment, the standardized template is the parameter template of the new energy power generation equipment stored in the standardized template configuration pre-configured by the micro-service architecture side, and the standardized template contains various parameter types of the new energy power generation equipment (such as specifications and brand manufacturers). For details, please refer to FIG. 15.

In this embodiment, the exclusive-equipment-parameter-information is the parameter information of the new energy power generation equipment displayed in the form of a table, which is obtained by reorganizing the information of the new energy power generation equipment based on the standardized template. For details, please refer to FIG. 15.

The above technique has the beneficial effects that: it is used to achieve standardized reorganization of the information of the new energy power generation equipment of the new energy power station received based on the terminal device input by the user based on standardized templates, so that the information of new energy power generation equipment is standardized.

Embodiment 3:

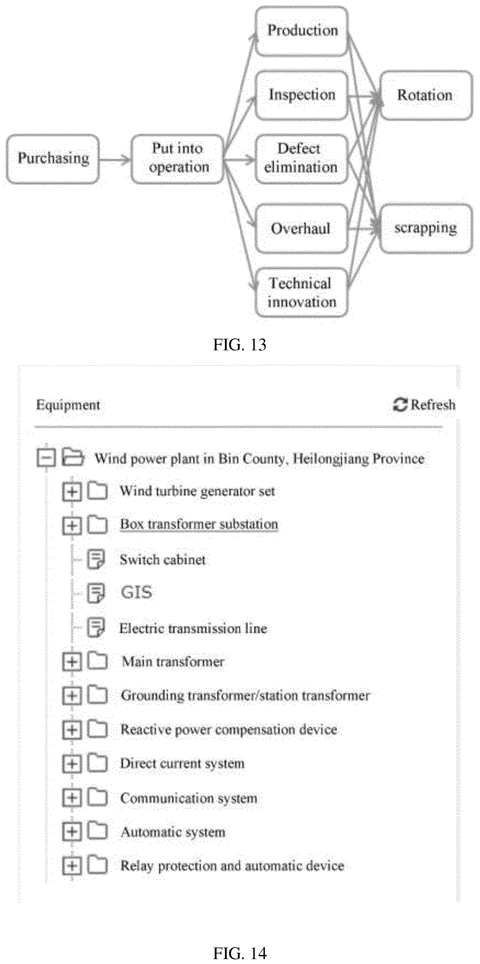

On the basis of Embodiment 1, the architecture module, referring to FIG. 3 and FIG. 14, includes:

a device generation unit, configured to generate the logical equipment of each new energy power generation equipment at the micro-service architecture side based on the exclusive-equipment-parameter-information of the new energy power generation equipment; and
a hierarchy building unit, configured to build the hierarchical tree of the logical equipment based on a parent-child relationship between the logical equipment.

In this embodiment, the logical equipment is a virtual device corresponding to the new energy power generation equipment (an information aggregate formed by the parameter information corresponding to the new energy power generation equipment) generated at the micro-service architecture side based on the exclusive device parameter information of the new energy power generation equipment.

In this embodiment, the hierarchical tree of logical equipment is built based on the parent-child relationship between logical equipment, that is:
the logical equipment is displayed in the system in a tree structure, starting from the specific power station, with large components as a second level, and then generating a specific wind turbine equipment, etc., where the tree structure is built by binding the parent physical equipment. For example, the parent equipment of the second level of the wind turbine generator set in a certain station is bound to the power station, and the parent equipment of a specific wind turbine equipment, such as No. 01 wind turbine equipment, is bound as the second level wind turbine set. The parent-child level results is strictly followed to perform binding to ensure the rigor of the tree structure, and the hierarchical tree of the logical equipment is built (that is, a hierarchical tree structure composed of the parent-child level relationship between the logical equipment of all new energy power generation equipment in the new energy power station).

The above technique has the beneficial effects that: based on the exclusive-equipment-parameter-information of the new energy power generation equipment, the logical equipment of each new energy power generation equipment is generated at the micro-service architecture side, and the hierarchical tree of the logical equipment is built based on the parent-child relationship between the logical equipment, so that the logical equipment of physical equipment is built at the micro-service architecture side, and all the logical equipment in the new energy power station and the parent-child relationship between them are represented by the hierarchical tree structure, which makes the logical equipment information more rigorous.

Embodiment 4:

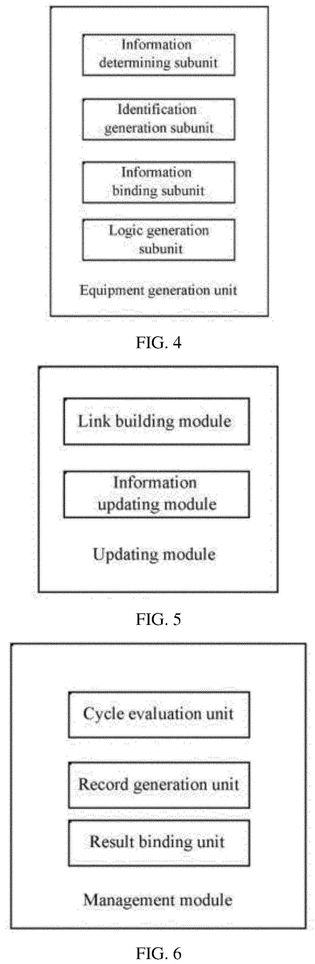

On the basis of Embodiment 3, the equipment generating unit, referring to FIG. 4 and FIG. 12, includes:

an information determining subunit, configured to determine attribute information, an equipment name and an equipment position of the new energy power generation equipment based on the exclusive-equipment-parameter-information;
an identification generating subunit, configured to determine a corresponding material code based on the attribute information, determine a serial number of each new energy power generation equipment, and generate an unique identification code of the corresponding new energy power generation equipment based on the corresponding material code and serial number;
an information binding subunit, configured to bind the equipment name and the unique identification code of the corresponding new energy power generation equipment to obtain initial architecture information of the logical equipment; and
a logic generating subunit, configured to generate a logic device corresponding to the new energy power generation equipment at the micro-service architecture side based on the initial architecture information.

In this embodiment, in the process of generating the equipment, specifications, brand manufacturers, an equipment location of the logical equipment carried in the materials are fused with the actual parameter information of the physical equipment. In the full life cycle ledger management system of the equipment, the parameter information of the equipment is bound with the unique numbered physical equipment, and the physical equipment needs to be positioned at the unique logical equipment location. When generating the physical equipment, it is necessary to select the material codes of the corresponding specifications and brand manufacturers to ensure that the brand manufacturer parameters and specifications parameters of the physical equipment are consistent with the bound materials, and at the same time, the unique code generated by the physical equipment takes the bound material code as a first 12 codes. When generating physical equipment, station staff only need to refer to the standard template prefabricated by a group company and fill in relevant parameters, click "generate physical equipment" in selection operation and fill in the generation quantity to generate relevant physical equipment, and multiple physical equipment can be generated at one time. If it is necessary to modify the parameter information of the generated physical equipment in batches, it can be achieved by filling in the new parameter information in the equipment technical parameter template, and reversely associate the generated physical equipment, without need for multiple modifications one by one by the station staff. Or it can be achieved by using the function of "adding/modifying equipment ledge parameters in batches" on the physical equipment list page, selecting the ledge type and parameter name to be added/modified, filling in the modified parameter values, and selecting the physical equipment to be modified.

On the premise of ensuring safe data transmission and fast portability and ensuring correct and standardized parameters, it does not occupy a lot of time of the station staff. This method is not limited to the type of station, whether it is wind power station, photovoltaic power station or hydropower station, this method can be applied to conduct equipment ledge management.

The application of the full life cycle management system for the new energy power generation equipment based on the micro-service architecture in the power industry has truly realized unified management and control in the whole group company. The personnel of the centralized control center can check the equipment usage status of each station in real time at the system terminal, and master the quantity of the equipment in each station and the quality of equipment ledger management and control. Moreover, the standardization of the whole group is consistent, and it is not necessary to spend extra time to adapt to the control habits of the station equipment. When accessing the new station in the later stage, the new station can be processed by coping operation according to the specifications that have been implemented at present.

In this embodiment, when the physical equipment is generated, the code of the physical equipment is automatically generated by the system, and the code composition structure is material code plus 6-digit serial number. In order to ensure the regularity of the coding of the physical equipment, when generating the physical equipment, it is necessary to select the material codes of the corresponding specifications, brands and brand manufacture to ensure that the brand parameters and specifications parameters of the physical equipment are consistent with the bound materials, so that the physical equipment has the two attributes of specifications and brands when being generated, and the unique code generated by the physical equipment takes the bound material code as a first 12 digits. When it is necessary to count the number of the equipment of a certain specification and brand manufacturer, all relevant physical equipment can be found by fuzzy search directly through the material code.

In this embodiment, the attribute information is information related to the attributes of the new energy power generation equipment, such as the specifications and brand manufacturers of the new energy power generation equipment.

In this embodiment, the equipment location is actual location of the new energy power generation equipment in the new energy power station.

In this embodiment, the material code is the preset code corresponding to the attribute information of the new energy power generation equipment.

In this embodiment, the serial number is the sequence number representing the new energy power generation equipment in all new energy power generation equipment of same brand manufacturer and same specification, where the serial number consists of six digits.

In this embodiment, the serial number of each new energy power generation equipment is determined, that is:

the serial number of each new energy power generation equipment is determined based on preset serial number determination method (for example, sorting and determining the serial number according to time that the new energy power generation equipment is dispatched from a factory).

In this embodiment, the unique identification code of the corresponding new energy power generation equipment is generated based on the corresponding material code and serial number, that is:

material code (12 digits) plus serial number (6 digits) is used as the unique identification code of the corresponding new energy power generation equipment.

In this embodiment, the unique identification code is the code used to distinguish the corresponding new energy power generation equipment from other new energy power generation equipment.

In this embodiment, the initial architecture information is the information obtained by binding the equipment name and the unique identification code of the corresponding new energy power generation equipment.

In this embodiment, based on the initial architecture information, the logical equipment corresponding to the new energy power generation equipment is generated at the micro-service architecture side, that is:

after the initial architecture information is stored in the micro-service architecture side, the logical equipment corresponding to the new energy power generation equipment is obtained.

The above technique has the beneficial effects that: the corresponding material code is determined based on the attribute information, equipment name and equipment location of the new energy power generation equipment, the unique identification code of the new energy power generation equipment is generated based on the corresponding material code and serial number, and the logical equipment of each new energy power generation equipment is generated at the micro-service architecture side in combination with the equipment name.

Embodiment 5:

On the basis of Embodiment 1, the updating module, referring to FIG. 5, includes:

a link building module, configured to build a unique communication link between each new energy power generation equipment and the corresponding logic device; and
an information updating module, configured to update the equipment- update-information of the new energy power generation equipment to the hierarchical tree of the logical equipment in real time based on the unique communication link between the new energy power generation equipment and the corresponding logical equipment, and obtain the update record of the hierarchical tree and the information update record of each new energy power generation equipment.

In this embodiment, the unique communication link is a communication link between each new energy power generation equipment and the corresponding logic device.

The above technique has the beneficial effects that: based on the unique communication link between each new energy power generation equipment and the corresponding logical equipment, the equipment-update-information of the new energy power generation equipment is updated to the hierarchical tree of the corresponding logical equipment in real time, and then the update record of the hierarchical tree and the information update record of each new energy power generation equipment are obtained.

Embodiment 6:

On the basis of Embodiment 1, the management module, referring to FIG. 6, includes:

a cycle evaluation unit, configured to periodically evaluate the corresponding new energy power generation equipment based on the update record of the hierarchical tree and the information update record of the new energy power generation equipment to obtain a cycle evaluation result;
a record generation unit, configured to generating a full life information record corresponding to the new energy power generation equipment in real time based on initial architecture information of a logical equipment corresponding to the new energy power generation equipment and the information update record of the corresponding new energy power generation equipment; and
a result binding unit, configured to bind and fuse the cycle evaluation result and the full life information record of the new energy power generation equipment to obtain the full-life-cycle-management-record of the new energy power generation equipment.

In this embodiment, the periodic evaluation result is a result obtained by periodically evaluating the corresponding new energy power generation equipment based on the update record of the hierarchical tree and the information update record of the new energy power generation equipment.

In this embodiment, the full life information record is a record containing all the information in the full life cycle of the new energy power generation equipment, which is composed of the initial architecture information of the logical equipment corresponding to the new energy power generation equipment and the information update record corresponding to the new energy power generation equipment.

The above technique has the beneficial effects that: periodic evaluation of the corresponding new energy power generation equipment is conducted based on the update record of the hierarchical tree and the information update record of the new energy power generation equipment to obtain a cycle evaluation result; the full life information record corresponding to the new energy power generation equipment is generated in real time based on the initial architecture information of the logical equipment corresponding to the new energy power generation equipment and the information update record of corresponding new energy power generation equipment; and the cycle evaluation result and the full life information record of the new energy power generation equipment is bound and fused to obtain the full-life-cycle-management-record containing the periodic evaluation result and the full life information record of the new energy power generation equipment.

Embodiment 7:

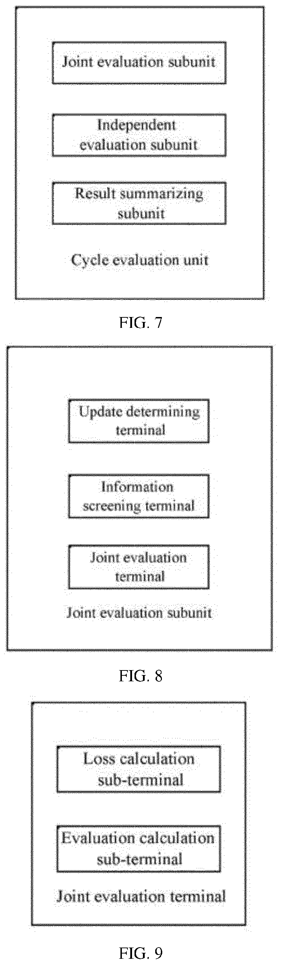

On the basis of Embodiment 6, the period evaluation unit, referring to FIG. 7, includes:

a joint evaluation subunit, configured to carry out periodic joint evaluation on the new energy power generation equipment based on the update record of the hierarchical tree to obtain a periodic joint evaluation result;
an independent evaluation subunit, configured to perform periodic independent evaluation on the new energy power generation equipment based on the information update record of the new energy power generation equipment to obtain a periodic independent evaluation result; and
a result summarizing subunit, configured to summarize the periodic macro evaluation result and the periodic independent evaluation result to obtain the periodic evaluation result.

In this embodiment, the periodic joint evaluation result is a result obtained after periodic joint evaluation on the new energy power generation equipment based on the update record of the hierarchical tree.

In this embodiment, the periodic independent evaluation result is a result obtained after periodic independent evaluation on the new energy power generation equipment based on the information update records of the new energy power generation equipment.

The above technique has the beneficial effects that: the periodic joint evaluation on the new energy power generation equipment is realized based on the update record of the hierarchical trees, and the periodic independent evaluation on the new energy power generation equipment is realized based on the information update records of the new energy power generation equipment, so as to obtain the periodic evaluation result containing the periodic joint evaluation result and the periodic independent evaluation result.

Embodiment 8:

On the basis of Embodiment 7, the joint evaluation subunit, referring to FIG. 8, includes:

an update determining terminal, configured to determine an equipment being updated and an equipment-update-information set in a current evaluation period based on the update record of the hierarchical tree, determine update-relevance-information in each first equipment-update-information in the equipment-update-information set, and determine a range of affected interval level of each piece of update-relevance-information;

an information screening terminal, configured to determine interval levels between each equipment being updated and the new energy power generation equipment being evaluated based on a parent-child relationship in the hierarchical tree of the logical equipment, and taking the update-relevance-information corresponding to the range of affected interval level containing the interval level as final update-relevance-information; and

a joint evaluation terminal, configured to obtain the periodic joint evaluation result based on all the final update-relevance-information in the equipment-update-information set.

In this embodiment, the equipment being updated is the new energy power generation equipment that is determined to be updated in the current evaluation period based on the update record of the hierarchical tree.

In this embodiment, the current evaluation period is an evaluation cycle when the new energy power generation equipment is periodically being evaluated at present, and the specific duration is determined according to the user.

In this embodiment, the equipment-update-information set is an equipment-update-information set generated in the current evaluation period determined based on the update record of the hierarchical trees, and the equipment-update-information includes the update information generated in the production business processes such as equipment procurement, maintenance, commissioning, patrol inspection, overhaul, rotation and scrapping.

In this embodiment, the first equipment update information is the equipment update information contained in the equipment-update-information set.

In this embodiment, the update-relevance-information is the equipment-update-information that will affect other new energy power generation equipment.

In this embodiment, the range of affected interval level is the range of interval levels between the new energy power generation equipment affected by the update-relevance-information and the new energy power generation equipment corresponding to the said update-relevance-information. For example, new energy power generation equipment A is at the second level in the hierarchical tree of the logical equipment, and new energy power generation equipment B is at the fifth level in the hierarchical tree of the logical equipment, so the interval level between new energy power generation equipment A and new energy power generation equipment B is -3.

In this embodiment, the final update-relevance-information is the update-relevance-information corresponding to the range of affected interval levels including the interval level.

The above technique has the beneficial effects that: by extracting the update-relevance-information from the equipment-update-information, and determining the range of affected interval level of each update-relevance-information, the periodic joint evaluation of the new energy power generation pen is realized based on the final update-relevance-information of the range of affected interval level containing the interval level.

Embodiment 9:

On the basis of Embodiment 8, the joint evaluation terminal, referring to FIG. 9, includes:

a loss calculation sub-terminal, configured to determine an impact factor of the final update-relevance-information, calculate a final impact factor of the final update-relevance-information based on the impact factor and the interval level, and calculate a first loss ratio of the new energy power generation equipment being evaluated in the current evaluation period based on the final impact factors of all the final update-relevance-information in the first equipment-update-information set;

an evaluation calculation sub-terminal, configured to calculate a joint evaluation value of the new energy power generation equipment being evaluated in the current evaluation period based on a joint evaluation value of the new energy power generation equipment being evaluated in a previous evaluation period and the first loss ratio in the current evaluation period, and sort joint evaluation values of the new energy power generation equipment in all evaluation periods to obtain the periodic joint evaluation result.

In this embodiment, the impact factor is a numerical value representing the influence degree of the final update-relevance-information on the loss of other new energy power generation equipment within the range of the affected interval level. The greater the impact factor, the greater the influence degree of the final update-relevance-information on the loss of other new energy power generation equipment within the range of the affected interval level.

In this embodiment, calculating the final impact factor of the final update-relevance-information based on the impact factor and the interval level includes:

$$\alpha_z = \delta \frac{\alpha_y}{\Delta c}$$

In the formula, $\alpha_z$ is the final impact factor of the final update-relevance-information, $\delta$ is an impact coefficient of the new energy power generation equipment being evaluated (i.e., the numerical value representing the degree to which the new energy power generation equipment is affected by the final update-relevance-information in the equipment-update-information of other new energy power generation equipment and loss is caused; the greater the influence coefficient, the greater the degree to which the new energy power generation equipment is affected by the final update-relevance-information in the equipment-update-information of other new energy power generation equipment and the loss is caused), $\alpha_y$ is the impact factor, and $\Delta c$ is the number of intervals.

Based on the above formula, the final impact factor of the final update-relevance-information can be accurately calculated.

In this embodiment, based on the final impact factors of all the final update-relevance-information in the first equipment-update-information set, the first loss ratio of the new energy power generation equipment being evaluated in the current evaluation period is calculated, including:

$$\gamma_{s1} = \frac{1}{n} \sum_{i=1}^{n} \frac{\Delta c_i}{c_{all}} * \alpha_{zi}$$

In the formula, $\gamma_{s1}$ is the first loss ratio of the new energy power generation equipment being evaluated in the current evaluation period, n is the total number of the final update-relevance-information contained in the first equipment-update-information set, i is the i-th piece of final update-relevance-information in the first equipment-update-information set, and $\Delta c$ is the number of the interval level between the new energy power generation equipment corresponding to the i-th piece of final update-relevance-information in the first equipment-update-information set and the new energy power generation equipment being evaluated. $c_{all}$ is the total number of the levels in the hierarchical tree of the logical equipment, and $\alpha_{zi}$ is the final impact factor of the i-th piece of final update-relevance-information in the first equipment-update-information set.

Based on the above formula, the first loss ratio of the new energy power generation equipment being evaluated in the current evaluation period can be accurately calculated.

In this embodiment, based on the joint evaluation value of the new energy power generation equipment being evaluated in the last evaluation cycle and the first loss ratio in the current evaluation period, calculating the joint evaluation value of the new energy power generation equipment being evaluated in the current evaluation period includes:

$$p_{ld} = p_{ls}(1 - \gamma_{s1})$$

where, $p_{ld}$ is the joint evaluation value of the new energy power generation equipment being evaluated in the current evaluation period, $p_{ls}$ is the joint evaluation value of the new energy power generation equipment being evaluated in the previous evaluation cycle, and $\gamma_{s1}$ is the first loss ratio of the new energy power generation equipment being evaluated in the current evaluation period.

Based on the above formula, the joint evaluation value of the new energy power generation equipment being evaluated in the current evaluation period can be accurately calculated.

In this embodiment, the joint evaluation value represents a numerical value evaluated by joining the corresponding new energy power generation equipment being evaluated in the current evaluation period and the influence of other new energy power generation equipment on the corresponding new energy power generation equipment.

In this embodiment, the periodic joint evaluation result is the result obtained by sorting the joint evaluation values of the new energy power generation equipment in all evaluation periods.

The above technique has the beneficial effects that: the final impact factor of the final update-relevance-information is calculated based on the impact factor and the interval level of the final update-relevance-information, the first loss ratio of the new energy power generation equipment being evaluated in the current evaluation period is calculated based on the final impact factors of all the final update-relevance-information in the first equipment-update-information set. Based on the joint evaluation value of the new energy power generation equipment being evaluated in the last evaluation cycle and the first loss ratio in the current evaluation period, the joint evaluation value of the new energy power generation equipment in the current evaluation period is calculated, the joint evaluation values of the new energy power generation equipment in all evaluation cycles are sorted, and the result obtained after the joint evaluation on the new energy power generation equipment is obtained.

Embodiment 10:

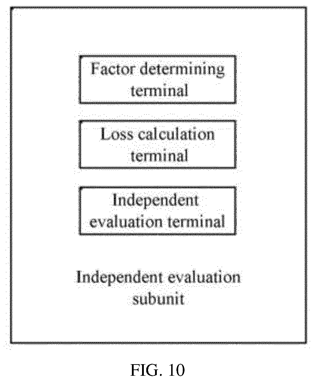

On the basis of Embodiment 8, the independent evaluation subunit, referring to FIG. 10, includes:

a factor determining terminal, configured to determine second equipment-update-information of the new energy power generation equipment in the current evaluation period based on the information update record, determine equipment-influence-information in the second equipment-update-information, and determine a loss factor of the equipment-influence-information;

a loss calculation terminal, configured to calculate a second loss ratio of the new energy power generation equipment in the current evaluation period based on the loss factors of all the equipment-influence-information in the second equipment-update-information; and

an independent evaluation terminal, configured to calculate an independent evaluation value of the new energy power generation equipment in the current evaluation period based on an independent evaluation value of the new energy power generation equipment in a previous evaluation period and the second loss ratio in the current evaluation period, and sort independent evaluation values of the new energy power generation equipment in all evaluation periods to obtain the periodic independent evaluation result.

In this embodiment, the second equipment-update-information is the equipment-update-information of the new energy power generation equipment being updated in the current evaluation period which is determined based on the information update record.

In this embodiment, the equipment-influence-information is the information that will cause loss influence on the new energy power generation equipment in the second equipment-update-information.

In this embodiment, the loss factor is the degree that the equipment-influence-information will cause loss to the corresponding new energy power generation equipment, and the greater the loss factor, it indicates that the greater the degree that the equipment-influence-information will cause loss to the corresponding new energy power generation equipment.

In this embodiment, calculating the second loss ratio of the new energy power generation equipment in the current evaluation period based on the loss factors of all the equipment-influence-information in the second equipment-update-information includes:

$$\gamma_{s2} = \frac{1}{m} \sum_{j=1}^{m} \alpha_{sj}$$

where $\gamma_{s2}$ is the second loss ratio of the new energy power generation equipment in the current evaluation period, m is the total number of the equipment-influence-information contained in the second equipment-update-information, j is the j-th piece of equipment-influence-information contained in the second equipment-update-information, and $\alpha_{sj}$ is the loss factor of the j-th piece of equipment-influence-information contained in the second equipment-update-information.

Based on the above formula, the second loss ratio of the new energy power generation equipment in the current evaluation period can be accurately calculated.

In this embodiment, calculating the independent evaluation value of the new energy power generation equipment in the current evaluation period based on the independent evaluation value of the new energy power generation equipment in the previous evaluation period and the second loss ratio in the current evaluation period includes:

$$p_{dd} = p_{ds}(1 - \gamma_{s2})$$

where $p_{dd}$ is the independent evaluation value of the new energy power generation equipment in the current evaluation period, $p_{ds}$ is the independent evaluation value of the new energy power generation equipment in the previous evaluation cycle, and $\gamma_{s2}$ is the second loss ratio of the new energy power generation equipment in the current evaluation period.

Based on the above formula, the independent evaluation value of new energy power generation equipment in the current evaluation period can be accurately calculated.

In this embodiment, the periodic independent evaluation result is a result obtained by sorting the independent evaluation values of the new energy power generation equipment in all evaluation periods.

The above technique has the beneficial effects that: the second loss ratio of the new energy power generation equipment in the current evaluation period is calculated based on the loss factor of the equipment-influence-information in the second equipment-update-information of the new energy power generation equipment in the current evaluation period, and the independent evaluation value of the new energy power generation equipment in the current evaluation period is calculated based on the independent evaluation value of the new energy power generation equipment in the previous evaluation period and the second loss ratio in the current evaluation period, and the independent evaluation values of the new energy power generation equipment in all evaluation periods are sorted, thus realizing periodic independent evaluation on the new energy power generation equipment based on the information update record.

Obviously, those skilled in the art can make various modifications and variations to the present invention without departing from the spirit and scope of the present invention. Thus, if these modifications and variations of the present invention are within the scope of the claims and their equivalents, the present invention is also intended to include these modifications and variations.

**Claims**

1. A full life cycle management system for a new energy power generation equipment based on a micro-service architecture, comprising:

   an inputting module, configured to receive exclusive-equipment-parameter-information of each new energy power generation equipment in a new energy power station input by a user based on a terminal device;
   an architecture module, configured to generate a hierarchical tree of a logical equipment corresponding to the new energy power station at the micro-service architecture side based on the exclusive-equipment-parameter-information;
   an updating module, configured to update equipment-update-information of the new energy power generation equipment to the hierarchical tree of the logical equipment in real time, and obtain a update record of the hierarchical tree and an information update record of each new energy power generation equipment; and
   a management module, configured to generate a full-life-cycle-management-record of the new energy power generation equipment based on the update record of the hierarchical tree and the information update record of each new energy power generation equipment.

2. The full life cycle management system for the new energy power generation equipment based on the micro-service architecture according to claim 1, wherein the inputting module comprises:

   an information receiving unit, configured to receive information of the new energy power generation equipment in the new energy power station input by the user based on the terminal device; and
an information reorganizing unit, configured to reorganize the information of the new energy power generation equipment based on a standardized template to obtain the exclusive-equipment-parameter-information of each new energy power generation equipment.

3. The full life cycle management system for the new energy power generation equipment based on the micro-service architecture according to claim 1, wherein the architecture module comprises:

   a device generation unit, configured to generate the logical equipment of each new energy power generation equipment at the micro-service architecture side based on the exclusive-equipment-parameter-information of the new energy power generation equipment; and
   a hierarchy building unit, configured to build the hierarchical tree of the logical equipment based on a parent-child relationship between the logical equipment.

4. The full life cycle management system for the new energy power generation equipment based on the micro-service architecture according to claim 3, wherein the equipment generation unit comprises:

   an information determining subunit, configured to determine attribute information, an equipment name and an equipment position of the new energy power generation equipment based on the exclusive-equipment-parameter-information;
   an identification generating subunit, configured to determine a corresponding material code based on the attribute information, determine a serial number of each new energy power generation equipment, and generate an unique identification code of the corresponding new energy power generation equipment based on the corresponding material code and serial number;
   an information binding subunit, configured to bind the equipment name and the unique identification code of the corresponding new energy power generation equipment to obtain initial architecture information of the logical equipment; and
   a logic generating subunit, configured to generate a logic device corresponding to the new energy power generation equipment at the micro-service architecture side based on the initial architecture information.

5. The full life cycle management system for the new energy power generation equipment based on the micro-service architecture according to claim 1, wherein the updating module comprises:

a link building module, configured to build a unique communication link between each new energy power generation equipment and the corresponding logic device; and

an information updating module, configured to update the equipment-update-information of the new energy power generation equipment to the hierarchical tree of the logical equipment in real time based on the unique communication link between the new energy power generation equipment and the corresponding logical equipment, and obtain the update record of the hierarchical tree and the information update record of each new energy power generation equipment.

6. The full life cycle management system for the new energy power generation equipment based on the micro-service architecture according to claim 1, wherein the management module comprises:

a cycle evaluation unit, configured to periodically evaluate the corresponding new energy power generation equipment based on the update record of the hierarchical tree and the information update record of the new energy power generation equipment to obtain a cycle evaluation result;

a record generation unit, configured to generating a full life information record corresponding to the new energy power generation equipment in real time based on initial architecture information of a logical equipment corresponding to the new energy power generation equipment and the information update record of the corresponding new energy power generation equipment; and

a result binding unit, configured to bind and fuse the cycle evaluation result and the full life information record of the new energy power generation equipment to obtain the full-life-cycle-management-record of the new energy power generation equipment.

7. The full life cycle management system for the new energy power generation equipment based on the micro-service architecture according to claim 6, wherein the cycle evaluation unit comprises:

a joint evaluation subunit, configured to carry out periodic joint evaluation on the new energy power generation equipment based on the update record of the hierarchical tree to obtain a periodic joint evaluation result;

an independent evaluation subunit, configured to perform periodic independent evaluation on the new energy power generation equipment based on the information update record of the new energy power generation equipment to obtain a periodic independent evaluation result; and

a result summarizing subunit, configured to summarize the periodic macro evaluation result and the periodic independent evaluation result to obtain the periodic evaluation result.

8. The full life cycle management system for the new energy power generation equipment based on the micro-service architecture according to claim 7, wherein the joint evaluation subunit comprises:

an update determining terminal, configured to determine an equipment being updated and an equipment-update-information set in a current evaluation period based on the update record of the hierarchical tree, determine update-relevance-information in each first equipment-update-information in the equipment-update-information set, and determine a range of affected interval level of each piece of update-relevance-information;

an information screening terminal, configured to determine interval levels between each equipment being updated and the new energy power generation equipment being evaluated based on a parent-child relationship in the hierarchical tree of the logical equipment, and taking the update-relevance-information corresponding to the range of affected interval level containing the interval level as final update-relevance-information; and

a joint evaluation terminal, configured to obtain the periodic joint evaluation result based on all the final update-relevance-information in the equipment-update-information set.

9. The full life cycle management system for the new energy power generation equipment based on the micro-service architecture according to claim 8, wherein the joint evaluation terminal comprises:

a loss calculation sub-terminal, configured to determine an impact factor of the final update-relevance-information, calculate a final impact factor of the final update-relevance-information based on the impact factor and the interval level, and calculate a first loss ratio of the new energy power generation equipment being evaluated in the current evaluation period based on the final impact factors of all the final update-relevance-information in the first equipment-update-information set;

an evaluation calculation sub-terminal, configured to calculate a joint evaluation value of the new energy power generation equipment being evaluated in the current evaluation period based on a joint evaluation value of the new energy power generation equipment being evaluated in a previous evaluation period and the first loss ratio in the current evaluation period, and sort joint evaluation values of the new energy power generation equipment in all evaluation periods to obtain the periodic joint evaluation result.

10. The full life cycle management system for the new energy power generation equipment based on the micro-service architecture according to claim 8, wherein the independent evaluation subunit comprises:

a factor determining terminal, configured to determine second equipment-update-information of the new energy power generation equipment in the current evaluation period based on the information update record, determine equipment-influence-information in the second equipment-update-information, and determine a loss factor of the equipment-influence-information;

a loss calculation terminal, configured to calculate a second loss ratio of the new energy power generation equipment in the current evaluation period based on the loss factors of all the equipment-influence-information in the second equipment-update-information; and

an independent evaluation terminal, configured to calculate an independent evaluation value of the new energy power generation equipment in the current evaluation period based on an independent evaluation value of the new energy power generation equipment in a previous evaluation period and the second loss ratio in the current evaluation period, and sort independent evaluation values of the new energy power generation equipment in all evaluation periods to obtain the periodic independent evaluation result.

Inputting module

Architecture module

Updating module

Management module

Full life cycle management system for a new energy power generation equipment based on a micro-service architecture

FIG. 1

Information receiving unit

Information reorganizing unit

Inputting module

FIG. 2

Equipment generation unit

Hierarchy building unit

Architecture module

FIG. 3

Information
determining subunit

Identification
generation subunit

Information
binding subunit

Logic generation
subunit

Equipment generation unit

FIG. 4

Link building module

Information
updating module

Updating module

FIG. 5

Cycle evaluation unit

Record generation unit

Result binding unit

Management module

FIG. 6

Joint evaluation subunit

Independent evaluation subunit

Result summarizing subunit

Cycle evaluation unit

FIG. 7

Update determining terminal

Information screening terminal

Joint evaluation terminal

Joint evaluation subunit

FIG. 8

Loss calculation sub-terminal

Evaluation calculation sub-terminal

Joint evaluation terminal

FIG. 9

FIG. 10

FIG. 11

FIG. 12

FIG. 13

FIG. 14

## Parameter Information of 35 kv wind turbine 1 wire #1 wind turbine (040101000268-000001)

| Equipment type | Wind turbine generator set | Specifications | WD88-1500A | Full name of manufacturer | Zhejiang Yunda Wind Power Co., Ltd |
|---|---|---|---|---|---|
| Wind turbine characteristic | Land-based shaped wind turbine | Type of wind turbine | Double feeded | Rated speed of impeller (r/min) | 17.2 |
| Rated voltage (V) | 690 | Rated speed of generator (r/min) | 1800 | Rated current (A) | 1090 |
| Rated frequency (Hz) | 50 | Impeller diameter (m) | 88 | Sweeping area (m²) | 6079.04 |
| Center height of wheel hub (m) | 70 | Guaranteed power curve air density (kg/m³) | 1.178 | Cut-in wind speed (m/s) | 3 |
| Shut-down wind velocity under low-velocity wind (m/s) | 3 | Shut-down wind velocity under high-velocity wind (m/s) | 25 | Maximum wind resistance grade (m/s) | 52.5 |
| Design service life (year) | 20 | Warranty period (year) | 5 | Cabinet weight (kg) | 56730 |
| Wheel hub weight (kg) | 16410 | Weight of single blad (kg) | 6400 | Completion date of lifting and erecting | 2014-02-26 |
| Full name of installation entity | China Energy Construction Group Heilongjiang Province Thermal Power First Engineering Co., Ltd. | Grid connection date | 2014-08-11 | Date of manufacture | 2014-08-10 |
| Start of warranty | 2015-10-01 | End of warranty | 2020-10-01 | Longitude (four digits reserved) | 3.5119 |
| Latitude (four digits reserved) | 41.2721 | Rated or not | Yes | Rated grade | Second class |
| Rated power (kW) | 1560 | Operating temperature range (°C) | -35°~55° | Acceptance date (240h) | 2015-06-20 |
| Qualified date of commissioning | 2015-06-01 | Manufacturing Code | W1500-13-006L | Date of access to new energy | 2017-04-01 |
| Date of access to new energy | 2014-08-11 | Blade length (m) | 42.8 | Rated voltage of generator (V) | 690 |
| Grid-connected voltage (V) | 690 | Rated wind speed (m/s) | 10.5 | | |

FIG. 15

## INTERNATIONAL SEARCH REPORT

| International application No. |
| --- |
| **PCT/CN2023/131080** |

**A. CLASSIFICATION OF SUBJECT MATTER**

G06Q 10/0639(2023.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, IEEE, ISI, CNKI: 生命周期, 设备, 管理, 更新, 层, 树, 微服务, 记录, life cycle, device, management, update, layer, tree, microservice, record

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115983701 A (CHINA THREE GORGES RENEWABLES (GROUP) CO., LTD. et al.) 18 April 2023 (2023-04-18) claims 1-10 | 1-10 |
| Y | CN 113065668 A (ZHEJIANG JUNAN INTELLIGENT TECHNOLOGY CO., LTD.) 02 July 2021 (2021-07-02) description, abstract, and description, paragraphs [0041]-[0096] | 1-10 |
| Y | CN 113971500 A (CHINA MOBILE GROUP GUANGDONG COMPANY LIMITED et al.) 25 January 2022 (2022-01-25) description, abstract, and description, paragraphs [0048]-[0107] | 1-10 |
| Y | CN 113821694 A (MAINTENANCE AND TEST BRANCH OF CHINA SOUTHERN POWER GRID PEAK SHAVING AND FREQUENCY MODULATION POWER GENERATION CO., LTD.) 21 December 2021 (2021-12-21) description, abstract, and description, paragraphs [0037]-[0135] | 4 |
| A | CN 110809028 A (XUCHANG XJ SOFTWARE TECHNOLOGY CO., LTD. et al.) 18 February 2020 (2020-02-18) entire document | 1-10 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **18 December 2023** | **25 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/131080**

| Patent document<br>cited in search report | | | Publication date<br>(day/month/year) | Patent family member(s) | Publication date<br>(day/month/year) |
|---|---|---|---|---|---|
| CN | 115983701 | A | 18 April 2023 | None | |
| CN | 113065668 | A | 02 July 2021 | None | |
| CN | 113971500 | A | 25 January 2022 | None | |
| CN | 113821694 | A | 21 December 2021 | None | |
| CN | 110809028 | A | 18 February 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310015387